Europäisches Patentamt

European Patent Office

Office européen des brevets

(19)

(11) Veröffentlichungsnummer: **0 445 102 B1**

(12) **EUROPÄISCHE PATENTSCHRIFT**

(45) Veröffentlichungstag der Patentschrift: **15.03.95**

(51) Int. Cl.⁶: **C05F 3/00**, C05F 17/00

(21) Anmeldenummer: **91890017.6**

(22) Anmeldetag: **29.01.91**

(54) **Verfahren zur geruchsarmen aeroben Behandlung von tierischen Exkrementen.**

(30) Priorität: **01.02.90 AT 215/90**

(43) Veröffentlichungstag der Anmeldung:
**04.09.91 Patentblatt 91/36**

(45) Bekanntmachung des Hinweises auf die
Patenterteilung:
**15.03.95 Patentblatt 95/11**

(84) Benannte Vertragsstaaten:
**AT BE CH DE DK ES FR GB GR IT LI LU NL SE**

(56) Entgegenhaltungen:
**EP-A- 0 244 391
EP-A- 0 309 872
EP-A- 0 364 678
WO-A-89/05784
AT-A- 355 602**

(73) Patentinhaber: **Lutz, Willibald, Dipl. Ing. Dr.
Jakob Gremdlinger Strasse 22
A-1140 Wien (AT)**

(72) Erfinder: **Lutz, Willibald, Dipl. Ing. Dr.
Jakob Gremdlinger Strasse 22
A-1140 Wien (AT)**

(74) Vertreter: **Köhler-Pavlik, Johann, Dipl.-Ing.
Margaretenplatz 5
A-1050 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur geruchsarmen aeroben Behandlung (Kompostierung) von flüssigen und/oder festen tierischen Exkrementen in Mischung mit organischem Kohlenstoffträgermaterial in einer Fermentierungstrommel.

Die Abfälle aus der Nutztierhaltung liegen je nach Haltungssystem in flüssiger Form (Flüssigmist, Jauche) und bzw. oder in fester Form (Festmist) vor. Die täglich anfallenden Mengen an tierischen Exkrementen in Kilogramm pro Großvieheinheit und Tag (1 GV = 500 kg Lebendgewicht) betragen z.B. für Flüssigmist von Schweinen 37 kg/GV.d (Festmist 26 kg/GV.d und Jauche 11 kg/GV.d), allgemein zwischen 6 und 50 kg/GV.d, abhängig von Tier- und Haltungsart.

In vielen Fällen werden die Tierexkremente wegen ihres Gehaltes an organischer Substanz, Pflanzennährstoffen und Spurenelementen zur Bodenverbesserung und Humusbildung bzw. Düngung landwirtschaftlich genutzter Flächen eingesetzt. Neben den möglichen vorteilhaften Wirkungen einer direkten Ausbringung auf Freilandflächen entstehen jedoch gleichzeitig Gefahren und Probleme. In mehreren Ländern wurden daher von den zuständigen Behörden Gesetze und Verordnungen über Maßnahmen gegen die Überdüngung mit Gülle und Geflügelkot erlassen (z.B. BRD - Niedersachsen, Niederlande). Selbst bei Einhaltung dieser Verordnungen treten beispielhaft folgende Gefahren auf:

a) Gefahren für das Grundwasser

Bei ordnungsgemäßer Ausbringung, d.h. bei pflanzengerechten Mengen und zu Zeiten, in denen die Pflanzen assimilieren, werden die im Flüssigmist und Hühnerkot enthaltenen Nährstoffe weitgehend von den Pflanzen aufgenommen; überschüssige Mengen an Nitrit, Nitrat und Phosphat werden jedoch, insbesondere bei leichten Böden, nur geringfügig gebunden, sodaß sie durch Auswaschung in das Grundwasser gelangen können. Wird dieses als Trinkwasser genutzt, stellen insbesondere Nitrit und Nitrat eine Gefahr für die Gesundheit dar. Der Nitratgehalt im Trinkwasser darf daher gemäß Trinkwasserrichtlinien der WHO 50 mg/l nicht überschreiten. Bei verrottetem Festmist sind die Nährstoffe schwerer verfügbar bzw. ab- oder umgebaut als bei unbehandeltem Flüssigmist.

b) Gefahren für Oberflächengewässer

Bei unsachgemäßer Ausbringung und Lagerung landwirtschaftlicher Abgänge und Abwässer können durch Abschwemmungen von landwirtschaftlichen Nutz- und Betriebsflächen Nährstoffe, Krankheitserreger und organische, biologisch abbaubare Bestandteile in diese Gewässer eingetragen werden. Erhöhte Nährstoffkonzentration, vor allem an Phosphor und Stickstoff, führt zu Sauerstoffzehrung und verstärktem Pflanzenwuchs in Gewässern (Eutrophierung).

c) Gefahren für Abwasserbehandlungsanlagen

Flüssigmist, Hühnerkot und Jauche dürfen wegen ihrer hohen BSB-Belastung und des hohen Gehalts an Nährstoffen nicht direkt in kommunale Abwasserbehandlungsanlagen eingeleitet werden. Eine derartige Entsorgung ist unter Umständen nur nach einer Vorbehandlung möglich, die den jeweils vorgegebenen Einleitungskonzentrationen gerecht wird.

d) Gefahren für die Gesundheit

Tierexkremente können Krankheitserreger und Parasiten verschiedener Art enthalten, die auch für den Menschen eine ernsthafte Gesundheitsgefährdung darstellen können. Die Übertragung der Erreger ist sowohl unmittelbar durch Kontakt bei der Handhabung der Tierexkremente als auch mittelbar über Verschmutzung von Futterpflanzen und Nahrungsmitteln sowie durch Abschwemmung oder Auswaschung verseuchten Oberflächen- und Grundwassers möglich.

e) Gefahren für die Atmosphäre

Von Abfällen aus der Tierhaltung, aber auch von in Gärung übergegangenen pflanzlichen Stoffen können unangenehme Gerüche ausgehen. Sie wirken nicht nur belästigend auf die Umwelt, sondern beeinträchtigen auch die Gesundheit, wenn die Emissionen giftige oder reizauslösende Gase (z.B. Schwefelwasserstoff, Ammoniak) enthalten. Der vom Tier ausgeschiedene Harnstoff wird durch die in den Exkrementen ebenfalls enthaltene Urease in Kohlendioxid und Ammoniak zerlegt. Wird der Flüssigmist bis zur Ausbringung ohne ausreichende Belüftung zwischengelagert, dann fällt die Biomasse der Autolyse anheim, die zu erhöhten Geruchsemissionen, z.B. durch Ammoniak und Schwefelwasserstoff, führt. Andererseits werden bei künstlicher Belüftung die Geruchsstoffe in die Atmosphäre freigesetzt, soferne die Abluft keiner zusätzlichen Behandlung zur Geruchsverminderung unterzogen wird.

Aus den vorgenannten Nachteilen ergeben sich mehrere Ziele für die Behandlungsmethoden. Maßgebend hierfür ist zunächst die Verwendungsmöglichkeit der behandelten Abfälle, d.h. ob diese als Dünger im eigenen landwirtschaftlichen Betrieb bzw. überbetrieblich als Dünger wiederverwertet werden können, oder ob eine Entsorgung notwendig wird, wenn z.B. die für eine ordnungsgemäße Ausbringung erforderliche landwirtschaftliche Fläche nicht verfügbar ist oder aus Gründen des Gewässerschutzes jegliche weitere Verbringung auf Böden oder wegen Geruchsemissionen untersagt ist.

Entsprechend den vorgegebenen Zielen und betrieblichen Rahmenbedingungen werden heute zur Behandlung landwirtschaftlicher Abfälle verschiedene technische Prozesse angewendet, die in Verknüpfung oder in alleiniger Anwendung durch folgende Prozesse gekennzeichnet sind.

a) Biologische Prozesse (mikrobieller Stoffabbau)

- Aerobe Behandlung
  in flüssiger Phase (Belüftung)
  in fester Phase (Kompostierung)
- Anaerobe Behandlung (Vergärung)

Beide Prozesse führen zur Mineralisierung und Stabilisierung, verbunden mit Geruchsminderung sowie mit Verbesserung der Handhabung infolge Verminderung der Viskosität und - bei der Kompostierung - der Partikelgröße. Die bei der aeroben Behandlung freigesetzte Wärme kann zur Abtötung von Krankheitserregern sowie für technische Zwecke genutzt werden; die Abgasung von Ammoniak dient dem Ziel der Verminderung des Nährstoffgehaltes ebenso wie die anaerobe Denitrifikation.

b) Chemische Prozesse

- Fällung von Phosphat (z.B. mit Kalkmilch);
- Bindung von Ammoniak mit Säure
  zur Verminderung des Nährstoffgehaltes im Abwasser bei Rückgewinnung der Nährstoffe in Verbindung mit physikalischen Trennverfahren;
- Bindung von Wasser über Branntkalk
  zur Verbesserung der Handhabung;
- Anwendung chemischer Desinfektionsmittel
  zur Abtötung von Krankheitserregern.

c) Physikalische Prozesse

- Abtrennen von Feststoffen aus der flüssigen Phase (Siebung, Sedimentation, Flotation, Zentrifugation);
- Bindung von Wasser und Nährstoffen (Phosphat, Ammonium) an ad- oder absorbierende Feststoffe (z.B. Stroh, Tonminerale);
- Flockung suspendierter Feststoffe;
- Trocknung abgetrennter Feststoffe,
  zur Verbesserung der Handhabung sowie zur Verminderung des Nährstoffgehaltes in der flüssigen Phase und gegebenenfalls zur Nährstoffrückgewinnung.

Die chemischen und physikalischen Prozesse sind in der Regel nur Teilprozesse zur Behandlung der Tierexkremente und können außerdem zu Sekundäremissionsn führen (Verlagerung der Probleme in ein anderes Medium). Zur ganzheitlichen Lösung sind daher nur die biologischen Prozesse geeignet, wobei der aeroben Behandlung zunehmende Bedeutung zukommt. Die bekannten Verfahren der anaeroben Güllebehandlungsmethoden erfolgen in der Regel in der Flüssigphase, was zu einem erhöhten Aufwand durch Erhöhung der Massen und zu sekundären Emissionen (Abwasser) führt.

Außerdem tritt hier vielfach lediglich eine Verlagerung des Problems von der Feststoffphase in die Flüssigphase ein. Die aerobe Kompostierung verarbeitet hingegen sowohl flüssige als auch feste Tierexkremente.

Ebenso wie bei kommunalen Abfällen müssen bei der Kompostierung landwirtschaftlicher Abfälle stoffliche und physikalische Voraussetzungen erfüllt sein, um den mikrobiellen Rotteprozeß zu optimieren.

Das betrifft insbesondere
- das Nährstoffangebot und C/N-Verhältnis,
- das Wasserangebot,
- die Struktur im Hinblick auf Austausch der Respirationsgase und
- den pH-Wert.

Durch verfahrenstechnische Maßnahmen können Randbedingungen geschaffen werden, in denen die Mikroorganismen mit möglichst hoher Aktivität arbeiten können.

So liegt z.B. bei der Versorgung des Systems mit Sauerstoff das Problem in der Regel nicht darin, die notwendigen Mengen bereitzustellen, 1 - 4 g $O_2$ je Gramm organischer Substanz, sondern in dem Einbringen und der gleichmäßigen Verteilung des Sauerstoffes im Rottegut. Dies ist aber im wesentlichen eine Funktion des Luftporenvolumens und der Leitfähigkeit des Materials. Diese rein physikalischen Eigenschaften haben einen entscheidenden Einfluß auf den Sauerstoffeintrag. Wichtig ist nicht nur ein großes Luftporenvolumen, sondern auch eine große Porenzahl. Bei der großen Inhomogenität der anfallenden Abfälle ist eine Vorbehandlung in den meisten Fällen daher unumgänglich. Der Luftporengehalt wird darüber hinaus auch bestimmt durch den Wassergehalt des Materials. Da Mikroorganismen ihre Nahrung nur in gelöster Form aufnehmen können, ist die Bereitstellung von Wasser ebenso wichtig wie die von Sauerstoff. Das vorhandene Gesamtporenvolumen eines Materials muß also auf einen Anteil für das Wasser und einen für den Sauerstoff verteilt werden. Hier gibt es je Material spezifische Relationen.

Der pH-Wert des Ausgangsmaterials hat besonders auf die Anfangsphase der Rotte einen entscheidenden Einfluß. Er sollte im neutralen Bereich oder im alkalischen Milieu liegen. Anfangs-pH-Werte im sauren Bereich verursachen eine Hemmung der Rotte mit den unerwünschten Nebenwirkungen, wie z.B. der Bildung geruchsintensiver Stoffe. Für die meisten der nativen organischen Substanzen ist ein pH-Wert im Neutralbereich gegeben.

Ein weiterer Parameter ist das Verhältnis von Kohlenstoff zu Stickstoff. Dieses bestimmt im wesentlichen die Geschwindigkeit des Rotteablaufes. Günstig sind Werte um 20 anzusehen, da dann pro Zeiteinheit die höchsten Abbauraten, bezogen auf die meisten organischen Substanzen zu erzielen sind. Doch auch für die Anwendung hat das C/N-Verhältnis eine gewisse Bedeutung. Weite C/N-Verhältnisse bedeuten, daß Stickstoff zur Bildung der Zellsubstanz nicht in ausreichendem Maße zur Verfügung steht. Eine Stickstoff-Fixierung bei der Anwendung ist dann wahrscheinlich. Um dies zu verhindern, sind im Kompost C/N-Verhältnisse unter 20 in jedem Fall anzustreben.

Bei allen Bemühungen, den Rotteverlauf zu beschleunigen, sollte nicht unbeachtet bleiben, daß die pflanzenbauliche Anwendung des erzielten Produktes Grenzen setzt, die eine zu starke Reduzierung der Rottezeit irrelevant erscheinen läßt. Hervorzuheben ist die Phytotoxizität von nicht genügend abgebautem Material, wodurch in der Vergangenheit Kompostmaterial unterschiedlicher Herkunft bei den Anwendern in Verruf gekommen ist. Nach dem heutigen Stand des Wissens muß ein Kompost, abhängig vom vorausgegangenen Rotteverfahren, ein Alter von 12 bis 18 Wochen haben, um in dieser Hinsicht als unbedenklich zu gelten.

Die richtige Auswahl der zu verrottenden Materialien ist unter zwei Gesichtspunkten zu treffen. Einmal sollten der Rotte nur die Stoffe zugeführt werden, die mikrobiell umsetzbar sind, also durch das Verfahren eindeutig kompostiert werden können. Zum anderen müssen die Stoffe der Rotte ferngehalten werden, die die Anwendung des Endproduktes Kompost beeinträchtigen. Erwähnt seien hier z.B. die Schwermetalle oder organische Schadstoffe, die während des Kompostierprozesses weder abgebaut noch in eine unlösliche, pflanzenverträgliche Form umgewandelt werden. Bei der Kompostierung von landwirtschaftlichen Abfällen treten teilweise Abweichungen von den aufgeführten Voraussetzungen, die vorwiegend häuslichen Müll und kommunalen Klärschlamm berücksichtigen, auf.

Tierische Exkremente in Form von Flüssigmist haben ein für die Mikroorganismen ausreichendes Nährstoff- und Wasserangebot sowie einen günstigen pH-Wert im Neutralbereich. Das C/N-Verhältnis ist bei allen Tierarten mit 7 bis 12 sehr eng, was zu Stickstoffverlusten bei aeroben Behandlungsverfahren bei erhöhten Temperaturen durch Mangel an verfügbaren C-Verbindungen führt. Flüssigmist kann wegen der fehlenden Struktur nur nach Zusatz von strukturbildenden Stoffen kompostiert werden, während bei separierten Feststoffen aus Flüssigmist und bei Hühnerkot durch stärkeres Abtrennen der Flüssigkeit bzw. teilweiser Trocknung des Kotes im Stall oder geeigneten Trocknungsanlagen eine für die Kompostierung ausreichende Struktur erreicht werden kann. Im Festmist und im Hühnerkot ist das C/N-Verhältnis durch den Strohanteil und den Ablauf eines Teils des stickstoffreichen Harns im Stall weiter als im Flüssigmist.

Das bei der Landschaftspflege anfallende Grüngut weist beim C/N-Verhältnis, Wassergehalt, Lignifizierungsgrad und der Struktur sehr starke Unterschiede auf, die durch Zugabe N-reicher Stoffe, von flüssigkeits- bzw. feuchteabsorbierenden Stoffen und durch Zerkleinerung zu optimalen Verhältnissen geführt werden können.

Die optimalen Wassergehalte für die Kompostierung landwirtschaftlicher Abfallstoffe bei der Kompostierung sind umso höher, je grobstrukturierter die trockenen Zuschlagstoffe bzw. das Gut selbst ist.

Neben erheblichen Masse- und Volumenverlusten ist der Rotteprozeß gekennzeichnet durch eine Verengung des C/N-Verhältnisses, einer Verringerung der Gehalte an Wasser, organischer Substanz, Gesamtstickstoff und Ammonium-Stickstoff sowie einer Zunahme an Nitrat-Stickstoff. Bei der Kompostierung von tierischen Exkrementen geht der charakteristische Mist- und der später entstehende Ammoniak-Geruch innerhalb von einer bis drei Wochen verloren, und ein durch Aktinomyceten verursachter erdiger Geruch tritt hervor.

Werden die für die Kompostierung der landwirtschaftlichen Abfälle optimalen Wassergehalte und Strukturverhältnisse eingestellt, so steigen die Temperaturen in der Miete innerhalb von zwei bis vier Tagen auf 60 bis 70°C. Während eines Zeitraumes von vier bis sieben Wochen fallen die Temperaturen allmählich auf das Umgebungsniveau ab. Durch die Höhe der erreichten Temperaturen und die Haltezeiten kann von einer Entseuchung des Kompostes und einer Abtötung von Unkrautsamen ausgegangen werden. Um dies zu gewährleisten, ist neben einer Temperaturkontrolle auch ein Umsetzen der Mieten während der thermophilen Rottephase erforderlich.

In der Literatur , z.B. Schuchardt, F.: Ein Verfahren zur Kompostierung von Schweine-Flüssigmist unter Zusatz von Stroh und Perlit. Landbauforschung Völkenrode 35 (1985), H.l, S. 11 - 19, und Galler, W.W., Davey, C.B.: High-rate poultry manure composting with saw dust. Livestock Waste Management (1971), S. 159 - 162, sind zahlreiche Beispiele über Versuchs- aber auch Praxisanlagen zur Kompostierung tierischer Exkremente mit verschiedenen Zuschlagstoffen zu finden. Dabei haben die Zuschlagstoffe in allen Beispielen die Bindung des überschüssigen Wassers und die Bildung einer luftdurchlässigen Struktur des Komposthaufwerkes zum Ziel. Die verwendeten Zuschlagstoffe sind etwa für Flüssigmist z.B. Stroh, Rückgut, Sägemehl oder beispielsweise für Hühnerkot unter anderem Sägemehl, Torf, Rinde oder Schaumstoff.

Soll ein aus landwirtschaftlichen Abfällen hergestellter Kompost in den Handel gebracht werden, so sind neben den gesetzlichen Grundlagen und einschlägigen Normen, die insbesondere die Kennzeichnungspflicht, Mindestgehalte an Nährstoffen, Höchstgehalte an Schadstoffen und die Entseuchung betreffen, die Lager- und Handhabungseigenschaften des Kompostes zu berücksichtigen. Ein Vertrieb in Kunststoffbeuteln oder -säcken setzt eine streu- und rieselfähige Struktur des Kompostes voraus, die auch bei einer mehrmonatigen Lagerung, selbst bei Lagerhöhen von über 2 m, wie auf Paletten üblich ist, nicht zerstört wird. Aus den Kunststoffbehältnissen darf keine Flüssigkeit austreten, und die Anwender, die den Kompost zumeist mit den Händen ausstreuen, dürfen sich nicht übermäßig beschmutzen. Der für die Lagerung notwendige Trockensubstanzgehalt hängt von der Struktur des Kompost-Gemenges und dem Stabilisierungsgrad ab. Für Komposte aus Stroh-Flüssigmist-Gemengen, Festmist und Pflanzen sind Trockensubstanzgehalte von 20% bis 50% ausreichend, während ein Kompost aus reinem Hühnerkot Trockensubstanzgehalte von 75 % haben sollte.

Bei den bekannten Verfahren der aeroben Behandlung von tierischen Exkrementen treten insbesondere Geruchsprobleme (z.B. Schweinegülle) durch unkontrollierte Abbauvorgänge auf. Weiters sind lange Kompostierzeiten von mindestens zwölf bis achtzehn Wochen erforderlich, um die genormten Qualitätskriterien zu erfüllen.

So betrifft beispielsweise die AT-PS 382 862 das Trocknen und Konditionieren von Hühnermist oder ähnlich pastösen Stoffen. Letztere müssen allerdings wie Hühnermist zu kleinen Stangen geformt werden können. Das Verfahren dient zur Behandlung von Hühnermist ohne jegliche Zuschlagstoffe. Es arbeitet diskontinuierlich, wobei zwei Teilphasen unterschieden werden. In der ersten mikrobiologischen Phase, welche 20 bis 30 Stunden dauert, erfolgt eine intensive Belüftung des Hühnermistes, wobei durch mikrobielle Umsetzvorgänge (Kompostierung) Temperaturen von 70 bis 80°C erreicht werden. Danach wird das Verfahren umgestellt auf die Durchströmungstrocknungsphase, in welcher Fremdluft aus dem Hühnerstall in den zylindrischen Behälter eingeblasen wird und damit der Hühnermist bis auf eine Restfeuchte von unter 15% getrocknet wird. Die Durchströmungsphase dauert 10 bis 15 Stunden. Der exotherme Rotteprozess wird zu Trocknungs- und Konditionierungszwecken ausgenützt. Dieser biologisch aerobe Oxidationsprozeß wird nur so weit zur Energiegewinnung herangezogen, als er zum Trocknen und der dabei eintretenden Geruchsminderung des Hühnermistes (sogenannte Trockenstabilisierung) erforderlich ist. Er dient jedoch nicht dem selektiven Abbau der Geruchsstoffe, sodaß bei der für die Anwendung bzw. während derselben unumgänglichen Befeuchtung des getrockneten Materials, insbesonders im Falle von Hühnermist, erneut mit starker Geruchsemission zu rechnen ist. Dies ist auch bei normaler Lagerung bei Feuchtigkeitszutritt der Fall.

Die EP-A 210 382 beschreibt eine Vorrichtung zur Kompostierung organischer Abfälle, wie sie bei bisher üblichen Verfahren zur Anwendung kommt. Sie besteht aus einer um die Längsachse drehbaren Trommel, die mit stirnseitig angeordneten Wellenstummeln auf seitlichen Stützböcken gelagert ist und mittels mindestens einer im Bereich einer stirnseitig angeordneten Antriebseinrichtung bewegbar ist. Der Trommelmantel besteht aus Lochblechen und erlaubt somit keine kontrollierte Luftführung und Abluftreinigung, wie dies zur konzentrierten Absaugung der Abluft und nachfolgenden Behandlung zur Geruchsminderung des Verfahrens unbedingt notwendig ist.

Die WO 89/12 611 beinhaltet ein Verfahren zur Entsorgung von organischen Abfällen, insbesondere organischen Abfällen der Konserven- und Lebensmittelindustrie so wie ölhaltigen organischen Abfällen. Die Abfälle werden zusammen mit pflanzlichen Abfallstoffen, wie Sägespänen, Hobelspänen, gehäckseltem Stroh usw. und einem Aktivator vermischt, das Gemisch danach angefeuchtet, zu Mieten aufgeschichtet und bis zum Erreichen einer Temperatur von 65 bis 70°C anaerob vergärt. Danach wird erneut befeuchtet und unter aeroben Bedingungen bei 40 bis 45°C kompostiert. Das als Aktivator bezeichnete Material wird in einem zweistufigen Verfahren aus pflanzlicher Grünmasse, Schilfhäcksel, Stroh, Trester, dem Uferschlamm von Schilfgebieten, Geflügelmist und Torfkleie gewonnen. Typische Mischungsverhältnisse bei diesem Verfahren sind 20 bis 25 Gew.-% Abfälle der Konservenindustrie, 65 bis 70 Gew.-% pflanzliche Abfälle (Strukturmaterial), und 5 bis 10 Gew.-% Aktivator. Die Verweilzeit in der anaeroben Miete beträgt 14 bis 18 Tage und in der anschließenden aeroben Miete 4 bis 5 Wochen. Im Vergleich zu den zu entsorgenden organischen Abfällen sind relativ große Mengen an Strukturmaterial und Aktivator notwendig. Darüber hinaus sind die Einsatzstoffe des Verfahrens bereits selbst geruchlos bis geruchsarm. Aus diesem Grund ist keine biologische und mikrobiell gesteuerte Geruchsreduzierung vorgesehen, wie sie für die praktische Durchführung biologischer Behandlungen tierischer Exkremente eine beherrschende Rolle zur Beseitigung der Geruchsprobleme spielt.

Die EP-A 244 391 hat ein Verfahren zum Belüften einer Rotte sowie eine Vorrichtung zur Durchführung dieses Verfahrens zum Gegenstand. Dieses Verfahren betrifft insoferne die Geruchsminderung, als eine Konditionierung, d.h. die Temperatur- und Feuchtigkeitseinstellung der Abluft aus der Rotte, zum Zweck des optimalen Betriebes eines herkömmlichen Bio- bzw. Kompostfilters vorgenommen wird. Es handelt sich hier um eine reine Abluftkonditionierung, um den Betrieb eines biologischen Filters unter konstanten Bedingungen sicherzustellen. Hierbei wird die aus der Rotte abgesaugte Luft einem Wasch- und/oder Kühlaggregat zugeführt, in welchem die Temperatur von 60 bis 70°C auf 30 bis 40°C abgesenkt wird. Das obige Verfahren dient der alleinigen Wasch- und Kühlfunktion und gestattet keine spezielle Anpassung an die jeweiligen, die Geruchsbelästigung verursachenden Stoffe, wodurch auch die Geruchselimination nur in beschränktem Ausmaß möglich ist.

Schließlich ist in der DE-OS 3 511 7118 ein Verfahren zum Entseuchen von in Champignonkulturen benutzten Substraten beschrieben. Dieses auf ein einzelnes sehr spezielles Substrat bezogene Verfahren sieht die Zusetzung eines Kohlenstoff-Trägermaterials zur Einstellung eines bestimmten C/N-Verhältnisses vor. Dieses Verhältnis soll bei 14 bis 25 : 1, vorzugsweise 22 : 1 liegen. Weiters muß ein Stickstoffträger zugemengt werden, wobei vorzugsweise 7,5 Vol-% Eiweißhydrolisat verwendet wird. Hierfür wird entweder vorkompostierte Rinde und/oder ein Papierschlammgemisch vorgeschlagen. Da tierische Exkremente im Regelfall flüssig oder pastös anfallen und die Kompostierung festes, krümeliges und luftdurchlässiges Material erfordert, ist zur Verwertung der tierischen Exkremente die Einstellung eines bestimmten Feuchtigkeitsgehaltes von wesentlich größerer Bedeutung. Darauf wird bei den obigen Verfahren jedoch nicht näher eingegangen. Überdies würde die Zuführung von Stickstoffträgern bei Verwertung tierischer Exkremente zu einem sehr ungünstigen Kohlenstoff/Stickstoff-Verhältnis führen, da die Exkremente selbst Stickstoff im Überschuß aufweisen.

Die Aufgabe der Erfindung war es daher, ein Verfahren zu finden, welches die obigen Nachteile vermeidet und die geruchsarme Herstellung von Kompost aus landwirtschaftlichen Abfällen, vorzugsweise unter Einbeziehung von Siedlungsabfällen, unter Berücksichtigung der vorgeschriebenen Normen und Lager- bzw. Handhabungseigenschaften.

Diese Aufgabe wird erfindungsgemäß durch die Kombination der Verfahrensschritte a) bis k) gelöst, wobei

a) die Komponenten tierische Exkremente und organisches Kohlenstoffträgermaterial, z.B. Altpapier, Holzabfälle etc., im Masseverhältnis von 3: 1 bis 1 : 3, zusammen mit einer Bakterienmasse von 0,75 bis 7,5 kg TS (Trockensubstanz) pro Tonne beider Komponenten in die Fermentierungstrommel eingebracht werden, so daß sich eine Mischfeuchte von 40% bis 80% und ein C/N-Verhältnis von 5 : 1 bis 30 : 1 einstellt,

b) in der rotierenden Fermentierungstrommel bei einem Füllgrad von 20% bis 80% das Rohkompostmaterial 0,5 bis 10 Tage bei auf 50 bis 70°C ansteigender Temperatur belüftet wird,

c) dem aus der Fermentierungstrommel ausgetragenen vorgerotteten Kompostmaterial in einem Zwangsmischer zerkleinerte Grünabfälle zugegeben werden, daß sich ein Porenvolumen von 20% bis 60% ergibt,

d) das homogene Gemisch aus vorgerottetem Kompostmaterial und Grünabfällen mit oder ohne mechanische Umsetzung in Flächenmieten von 0,5 bis 3,0 m aufgesetzt und 1 bis 8 Wochen verrottet wird,

e) das verrottete Kompostmaterial aus Schritt d) einer Nachrotte in 0,5 bis 4,0 m hohen Mieten 1 bis 20 Wochen unterzogen wird,

f) die Abluftströme aus einem Güllezwischenspeicher, der Fermentierungstrommel, der Intensivrotte und Nachrotte einem Biowäscher mit einem Flüssigkeits-/Gasverhältnis von 1 - 5 l/m$^3$, einer Gasgeschwindigkeit in der Tauschzone von max. 1 m/sec, einer mittleren Verweilzeit von 0,5 bis 1,5 sec, einem mittleren Druckabfall von 0,5 bis 2,0 mbar und Schichthöhen von 0,5 bis 1,5 m zugeführt werden.

g) Bakteriennasse für den beschleunigten und selektiven Abbau der Geruchsstoffe in der Fermentierungstrommel, im Biowäscher und einer nachgeschalteten Belebtschlammanlage, unter Zugabe von flüssigen tierischen Exkrementen in der Höhe von 5% - 20 % der Gesamtgüllemenge in ein Belebungsbecken, erzeugt wird,

h) Überschußschlamm aus einem Nachklärbecken in ein Keimvermehrungsbecken geleitet wird,

i) die Keimvermehrung in einem getrennten Becken mit einer hydraulischen Aufenthaltszeit von 0,5 bis 2,0 Tagen bei Zudosierung von tierischen Exkrementen, Kondensaten und Sickerwasser erfolgt,

j) die flüssige Bakterienmasse mit einem Trockensubstanz-Gehalt von 5 bis 20 kg/m$^3$ in einer Entwässerungseinrichtung auf 50 bis 250 kg TS/m$^3$ (Trockensubstanz/m$^3$) eingedickt wird,

k) die Abluft über ein Biofilter aus 50 Gew.-% intensiv verrottetem Kompostmaterial und 50 Gew.-% grobkörnigem Rindenkompostmaterial bei Filterflächenbelastungen von 10 bis 300 m$^3$/m$^2$.h, bei mittleren Verweilzeiten von 5 bis 90 sec, Schichthöhen von 0,5 bis 1,5 m und einer Feuchtigkeit von 40 bis 60% geleitet wird.

Gemäß einem weiteren Merkmal der Erfindung wird dem Rohkompostmaterial am oder vor dem Trommeleingang Bakterienschlamm aus der Belebtschlammanlage zugegeben.

Beim erfindungsgemäßen Verfahren werden in der Belebtschlammanlage des Biowäschers samt nachgeschaltetem Keimvermehrungsbecken für den Abbau von Geruchsstoffen adaptierte Bakterien gezüchtet, die dem Kompostierprozess zugesetzt werden. Weiters erfolgt die biochemische Umsetzung geruchsintensiver Substanzen (z.B. Ammoniak Schwefelwasserstoff, Mercaptane) im wesentlichen in der geschlossenen Fermentierungstrommel und nachgeschalteten saugbelüfteten Rottehalle. Dabei wird die geruchsbeladene Abluft abgesaugt und im Biowäscher sowie anschließenden Biofilter gereinigt.

Die Kompostierzeit wird durch den Einsatz der adaptierten Bakterienmasse sowie dem steuerbaren Kompostierprozess in der Rottetrommel, Rottehalle und Nachrotte verkürzt. Die Gesamtzeit beträgt 4 bis 11 Wochen, vorzugsweise 7 Wochen. Die Qualität des hergestellten Kompostes ist von dem Kompostierprozess und dem Rohkompostmaterial abhängig. Beim erfindungsgemäßen Verfahren werden im Vergleich zu konventionellen Systemen die organischen Summenparameter (organische Substanz, Gesamtkohlenstoff) sowie die Pflanzenverträglichkeit (Frischmasseertrag, Keimrate) verbessert. Der Nährstoffgehalt (Stickstoff, Phosphor, Kalium, Calcium, Magnesium) ist erhöht und liegt überwiegend in pflanzenverfügbarer Form vor. Der Schadstoffgehalt wird primär von den zu kompostierenden Stoffen beeinflußt. Durch den Einsatz von Gülle und schadstoffarmen Kohlenstoffträger- (z.B. Altpapier, Karton, etc.) und Strukturmaterial (z.B. Grünabfälle, Häckselgut, etc.) liegt der Schwermetallgehalt im Vergleich zu den Mindestgüteanforderungen der ÖNORM S 2022, Gütekriterien für Müllkompost, sowie ÖNORM S 2021, Kultursubstrate, sehr niedrig. So beträgt z.B. der Cadmiumgehalt des im erfindungsgemäßen hergestellten Kompostes nur rund 10 - 20 % der konventionell hergestellten Komposte und Kultursubstrate.

Das erfindungsgemäße Verfahren ist auch hinsichtlich Seuchenhygiene konventionellen Systemen überlegen. Während bei herkömmlichen Systemen die Inaktivierung von Salmonellen und Enterokokken bei einer Reduktionsrate der KBE (koloniebildende Einheiten) von fünf Zehnerpotenzen liegt, beträgt diese beim erfindungsgemäßen Verfahren 6 bis 8 Zehnerpotenzen.

Weitere Merkmale und Vorteile der Erfindung werden anhand der nachfolgenden Beschreibung unter Bezugnahme auf die beigefügten Zeichnungen näher erläutert.

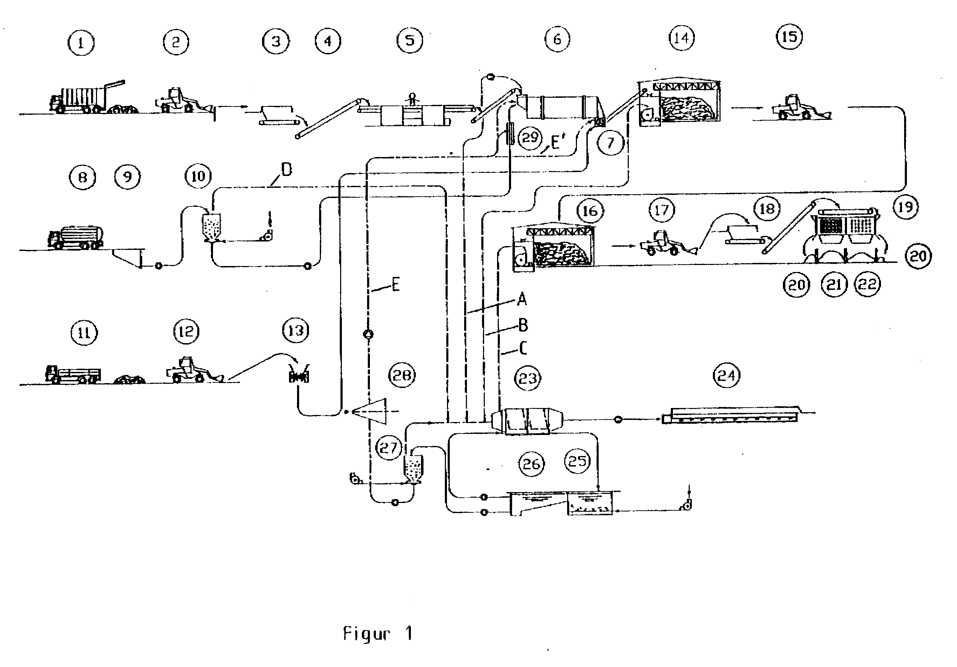

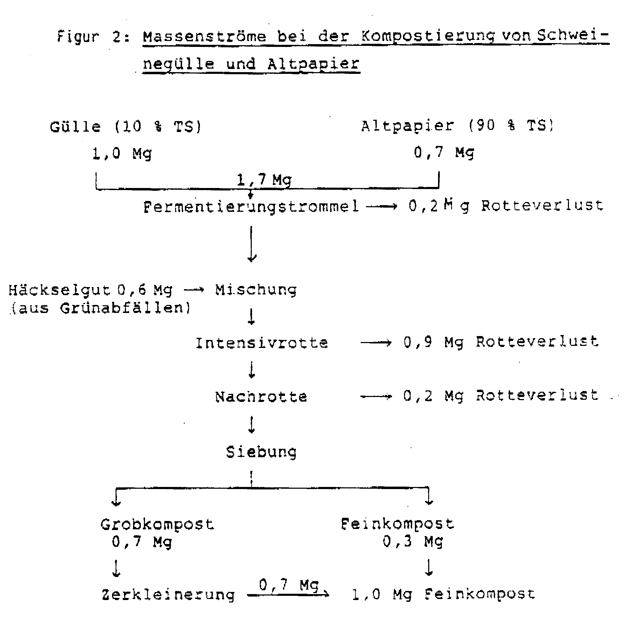

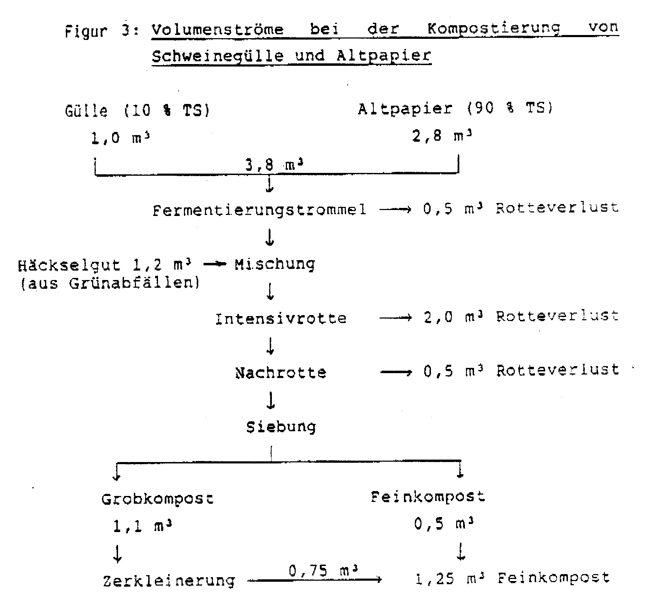

Die Fig. 1 stellt ein Fließschema für das erfindungsgemäße Verfahren am Beispiel der Güllekompostierung mit interner Keimvermehrung dar, Fig. 2 und 3 zeigen Schemata für die Massen- bzw. Volumensströme bei der Kompostierung von Schweinegülle und Altpapier nach dem erfindungsgemäßen Verfahren.

Zunächst werden die Zuschlagsstoffe abgestuft an unterschiedlichen Stellen des Kompostierverlaufes zugesetzt. Als Kohlenstoffträger 1 werden vorzugsweise organische Sortierfraktionen aus Siedlungsabfällen, wie z.B. Altpapier, Altkarton, Altholz etc., nach entsprechender Vorbehandlung (Zerkleinerung, eventuelle Schadstoffauslese etc.) eingesetzt. Die zugeführte Menge, die aus einem Flachbunker 2 über einen Dosierförderer 3 und einen Steigförderer 4 zu einer zusätzlichen Handauslese 5 und weiter zur Fermentierungstrommel 6 befördert wird, richtet sich nach der Art und Feuchtigkeit der Gülle. In der Mischung wird ein C/N-Verhältnis von 5 : 1 bis 30 : 1, vorzugsweise 20 : 1, eingestellt. Die Mischfeuchte liegt bei 40% bis 80%, vorzugsweise 60%. Die Gülle 8 wird in die Flüssigannahme 9 entleert und aus dem Zwischenspeicher 10, der über eine Abluftleitung D mit einem Biowäscher 23 verbunden ist, mittels einer mengenregulierbaren Dosierpumpe in die Fermentierungstrommel 6 geführt. In der Fermentierungstrommel 6 werden die Stoffströme vermengt. Gleichzeitig wird das Gemisch durch die Zufuhr von Luftsauerstoff in der Trommel belüftet. Vorzugsweise wird hierfür eine Fermentierungstrommel gemäß AT-PS 355 602 verwendet. Zum raschen Start der mikrobiellen Abbau- und Umwandlungsprozesse werden speziell angezüchtete und adaptierte Bakterienkulturen zugesetzt. Die Menge beträgt 0,75 bis 7,5 kg TS pro Tonne, vorzugsweise 2,2 kg TS pro Tonne Rohkompostgemisch. Das Mischungsverhältnis von z.B. Schweinegülle zu Kohlenstoffträgermaterial beträgt etwa 1 : 1 bis 1,5 : 1. Die Aufenthaltszeit in der Kompostiertrommel 6 beträgt 0,5 bis 10 Tage, vorzugsweise 3 bis 6 Tage. Während dieser Zeit steigt die Temperatur auf 50 bis 70 °C an, wodurch es zu einer weitgehenden Entseuchung des Güllegemisches kommt. Die geruchsbeladene Abluft wird abgesaugt und über eine Leitung A dem Biowäscher 23, vorzugsweise über einen Saugzugventilatur, zugeführt.

Die Abluftmenge ist mengenmäßig einstellbar, entsprechend den biochemischen Erfordernissen. Der Abbauvorgang in der Trommel 6 wird kontinuierlich überwacht, wobei folgende Parameter gemessen und registriert werden: Abluftmenge ($m^3$/h), Ablufttemperatur (°C), $CO_2$-Gehalt (%). Mit Hilfe dieser Parameter kann der Kompostierprozeß gesteuert und optimiert werden.

Der Füllgrad des Materials in der Trommel 6 beträgt 20 - 80%, vorzugsweise 70%. Der Füllgrad ist von der Art des Kohlenstoffträgers bzw. Strukturmateriales und der Mischfeuchte abhängig. Durch das Eigengewicht und die Drehbewegung in der Trommel mit 1 bis 5 Umdrehungen pro Minute kommt es zu einem Mahl- und Zerkleinerungseffekt. Bei hohem Füllgrad und hoher Umdrehungszahl ist die Zerkleinerung größer. Dies ist vorteilhaft bei großstückigem Strukturmaterial. Hingegen darf bei kleinstückigem Strukturmaterial die Vermahlung nicht zu hoch sein, da damit das Porenvolumen verringert und die Luftzufuhr zum Kompostsubstrat erschwert werden würde. Gleiches trifft auf den Feuchtegehalt zu, d.h. daß mit erhöhtem Wassergehalt der Trommelfüllgrad verringert werden muß. In der Praxis liegt der optimale Füllgrad bei den meisten Kompostrohmaterialien bei 65 - 75 %.

Der Rotteprozeß wird danach in der eingehausten Intensivrotte 14 fortgesetzt. Diese erfolgt in Form einer 0,5 bis 3,0 m hohen Miete, vorzugsweise 1,5 m hohen Tafelmiete. Zur Einstellung des erforderlichen Porenvolumens in der Miete und damit Sicherstellung einer gleichmäßigen und ausreichenden Versorgung der Mikroorganismen mit Luftsauerstoff wird vor der Intensivrotte Strukturmaterial 11 mit dem angerotteten Güllegemisch vermengt. Dies erfolgt vorzugsweise in einer als Wellenmischer ausgebildeten Austragsschnecke 7 der Rottetrommel 6. Als Strukturmaterial werden vorwiegend Grünabfälle, wie z.B. zerkleinerter Baum- und Strauchschnitt, mit Korngrößen bis zu 15 cm eingesetzt, welche von einem Flachbunker 12, allenfalls unter Zwischenschaltung einer Zerkleinerungsanlage 13, der Austragsschnecke 7 zugeführt werden.

Nach Durchmischung beträgt das Porenvolumen in der Intensivrotte anfänglich 25% bis 60%, vorzugsweise 35%, die Materialdichte liegt hierbei bei 0,5 bis 1,0 Tonnen/$m^3$, vorzugsweise bei 0,8 Tonnen/$m^3$. Die Aufenthaltszeit in der Hauptrotte beträgt eine bis acht Wochen, vorzugsweise drei Wochen (21 Tage). Die Abluft wird vorzugsweise durch die Miete in am Boden der Rotteplatte befindliche Belüftungskanäle abgesaugt. Hierfür dient ein mengenregulierbarer Saugventilator mit den dazugehörigen Luftleitungen B und Armaturen. Die abgesaugte Luft wird dem Abluftwäscher 23 zugeführt. In der Abluft werden die Parameter Abluftmenge ($m^3$/h), Ablufttemperatur (°C) und $CO_2$-Gehalt (%) kontinuierlich gemessen und registriert. Danach wird der Prozeß überwacht und optimiert. Wahlweise kann die Belüftung auch durch ein mechanisches Mietenumsetz- und Belüftungsgerät erfolgen. Nach Ablauf des Hauptrotteprozesses gelangt das Kompostmaterial in die Nachrotte 16, wo es entsprechend den Erfordernissen der gewünschten Kompostgüte abermals belüftet werden kann oder lediglich zwischengelagert wird. Auch hier können Belüftungskanäle im Hallenboden angebracht sein und gleichfalls wird die Abluft über einen mengenregulierbaren Saugzugventilator mit den zugehörigen Leitungen C und Armaturen dem Biowäscher 23 zugeführt. Die Miete kann 0,5 bis 4 m hoch, vorzugsweise 3 m hoch geschüttet werden. Auch hier kann ein mechanisches Umsetzgerät verwendet werden. Die Aufenthaltszeit beträgt eine bis zwanzig Wochen, vorzugsweise drei Wochen. Danach erfolgt die Absiebung 19 und Feinaufbereitung des Kompostes. In der Regel wird ein Feinkompost 22 mit einer Korngröße von kleiner als 8 mm und grob- bzw. mittelkörniger Kompost 21 von 8 - 30 mm Korngröße hergestellt. Das Überkorn 20 kann entweder neuerlich als Strukturmaterial eingesetzt oder einer externen Verwertung zugeführt werden.

Die geruchsbeladene Abluft wird an folgenden Stellen des Prozesses abgesaugt:

| - vom Güllezwischenspeicher 10: über Leitung D, | 10 - 100 m$^3$ Luft/h und m$^3$ Gülle |
|---|---|
| - von der Fermentierungstrommel 6: über Leitung A, | 5 - 30 m$^3$ Luft/h und m$^3$ Material |
| - von der Hauptrotte 14: über Leitung B, | 8 - 40 m$^3$ Luft/h und m$^3$ Material |
| - von der Nachrotte 16: über Leitung C. | 1 - 10 m$^3$ Luft/h und m$^3$ Material |

Somit beträgt die Abluftmenge 600 bis 4000 m$^3$/Tonne Kompostrohmaterial, vorzugsweise 1000 m$^3$/Tonne. Die Abluftreinigungsanlage besteht im wesentlichen aus dem Biowäscher 23 mit nachgeschaltetem Biofilter 24.

Der Biowäscher 23 weist folgende Dimensionierung auf:

Biowäscher

| Flüssigkeits-Gasverhältnis | 1 - 5 l/m$^3$ (2 l/m$^3$) |
|---|---|
| Abgasgeschwindigkeit in der Tauscherzone | max. 1 m/sec |
| mittlere Verweilzeit im Wäscher | 0,5 - 1,5 sec |
| Druckdifferenz im Wäscher | 0,5 - 2,0 mbar |
| Schichtstärke | 0,5 - 1,5 m |

Mit diesen Parametern werden Abbaugrade, gemessen als Geruchseinheiten (GE), von 90 - 96% erreicht. Der Biowäscher kann als Sprühturm, Gegenstrom- oder Kreuzstromwäscher, jeweils ein-oder mehrstufig, vorzugsweise als zweistufiger Sprühstromwäscher, ausgebildet sein, wobei erfindungsgemäß gleichzeitig adaptierte Keimkulturen gezüchtet werden. Das anfallende Abwasser wird hierbei im Kreislauf geführt.

Zur restlichen Geruchselimination ist ein Biofilter 24 (Kompostfilter) mit folgenden Bemessungsgrundlagen nachgeschaltet. Damit werden insgesamt olfaktometrisch gemessene Wirkungsgrade von 98 bis 99,9% erzielt.

Biofilter

| Filterflächenbelastung | 30 - 300 m$^3$/m$^2$ . h (50 m$^3$/m$^2$ . h) |
|---|---|
| mittlere Verweilzeit | 5 - 90 sec (50 sec) |
| Schichthöhe | 0,5 - 1,8 m (1,4 m) |
| Feuchtigkeit des Filtermaterials | 40 - 60 % |
| Art des Filtermaterials | 50/50 Rinden-/Abfallkompost |

Die gereinigte Abluft weist eine Konzentration von 50 bis 150 GE, vorzugsweise 70 GE, auf und entweicht als Reingas in die Atmosphäre.

An mehreren Stellen des Kompostierprozesses sowie dem Güllemanipulationsbereich wird die geruchsbeladene Abluft abgesaugt und einer Reinigung unterzogen. Geruchsstoffe entstehen bei den unvermeidlichen, im anaeroben Milieu ablaufenden Gärungsvorgängen des Kohlehydrate- und Fettabbaues der Exkremente. Diese beinhalten beispielsweise Fettsäuren (Ameisen-, Essig-, Propion-, Butter-, Valerian-, Milch- und Bernsteinsäure) oder Alkohole (Äthanol, n-Propanol, iso-Propanol, Butanol) und sonstige Stoffe (Azetoin, Azeton, Diazetyl). Beim anaeroben Eiweißabbau ist neben dem Stickstoff auch der Schwefelgehalt der Proteine für den chemischen Charakter eines Stoffwechselproduktes verantwortlich. Dabei entstehen folgende potentielle Abbauprodukte:

- Gase: Kohlendioxid, Schwefelwasserstoff, Ammoniak, Wasserstoff
- Säuren: Fettsäuren (wie oben)
- Amine: biogene oder primäre Amine wie Cadaverin, Putrescin (Leichengifte)
- Sonstige: Mercaptane, Indol, Skatol, Phenol, Kresol

Die heterogene Zusammensetzung der Abluftinhaltsstoffe aus mikrobiellen Stoffwechselprozessen zwingt dazu, summarisch und unspezifisch wirkende Verfahren zu ihrer Reinigung einzusetzen. Hierfür eignen sich chemische, biochemische, physikalische und thermische Verfahren.

Die gegenständliche Erfindung setzt ein biochemisches Verfahren voraus, wobei das Ziel nicht nur die angestrebte Geruchsminderung bzw. -elimination ist, sondern in einem speziellen Verfahrensschritt aerobe Bakterienkulturen gezüchtet werden. Diese Kulturen werden erfindungsgemäß dem Kompostrohstoff aus Gülle und organischem Trägermaterial bei deren Einbringung in die Fermentierungstrommel 6 zugesetzt, damit der aerobe Abbau beschleunigt und die Geruchsentwicklung gleichzeitig vermindert werden.

Die Mikroorganismen können als biologischer Rasen auf Einbauten und Füllkörpern angesiedelt oder in der Waschflüssigkeit suspendiert sein. Das erfindungsgemäße Verfahren arbeitet nach dem Belebtschlammverfahren mit suspendierten Schlammflocken. Die Dimensionierungsgrundlagen der Belebtschlammanlage sind aus Tabelle 1 im Anhang zur vorliegenden Beschreibung ersichtlich.

Hierbei hängt die Abbauleistung von der Art der Mikroorganismen und der gesamten Belebtschlammasse ab, die aus verfahrenstechnischen Gründen im Konzentrationsbereich von 1 bis 10 g Trockensubstanz pro Liter Wasser liegt. Die Abbauleistung der im Waschwasser befindlichen Schmutzfracht ist von der Schlammbelastung BTS (kg $BSB_5$ / kg TS.d) abhängig. Sie errechnet sich aus der Schmutzfracht ($BSB_5$) und dem Schlammtrockengewicht (TS) und liegt in der Größenordnung von 1 bis 12 kg/kg.d, vorzugsweise 5 kg/kg.d. Die Sauerstoffversorgung ist so auszulegen, daß im Waschwasser mindestens 0,5 bis 2,0 mg Sauerstoff pro Liter erhalten ist. Die Belebtschlammanlage besteht aus zwei Teilen, nämlich dem hochbelasteten Belebungsbecken 25 und dem nachgeschalteten Nachklärbecken 26. Der abgesetzte Schlamm wird aus dem Nachklärbecken in das Belebungsbecken 25 zur Aufrechterhaltung der Schlammkonzentration im Bereiche von 1 bis 10 g/l, vorzugsweise 2 g/l, zurückgeführt. Bei Überschreiten dieser Konzentration wird Belebtschlamm eingedickt und in das Keimvermehrungsbecken 27 geleitet. Bei der gegenständlichen Verfahrensweise beträgt die Verweilzeit im Belebungsbecken 25 und Nachklärbecken 26 insgesamt nur etwa eine bis vier Stunden, vorzugsweise zwei Stunden. Das Waschwasser wird aus dem Überlauf des Nachklärbeckens 26 entnommen und in den Biowäscher 23 geführt. Das Flüssigkeits-Gasverhältnis im Wäscher 23 beträgt 1 - 5 l/m$^3$. Das Schlammalter in der Belebtschlammanlage liegt bei 0,2 - 1,0 Tagen, vorzugsweise 0,5 Tage. Unter diesen Bedingungen haben die höherwertigen Mikroorganismen, die Eukaryonten (z.B. Protozoen) keine Entwicklungsmöglichkeit. Es herrschen vielmehr Prokaryonten (Bakterien) vor, die im Mittel eine Seitenlänge von 1 $\mu$m haben, ein geringeres Biovolumen erreichen und etwa 1/1000 des Gewichtes von Eukaryonten aufweisen. Die Stoffwechselintensität ist umgekehrt proportional zur Größe der Organismen. Folglich ist die gezielte Züchtung der Bakterien wegen ihrer großen Schmutzstoffabbauleistung und hoher Vermehrungsrate anzutreffen. Alle 20 - 40 Minuten kann sich ein Bakterium teilen, so daß es nach einem Tag etwa $2^{48}$ Nachkommen hat. Verbunden mit dieser hohen Leistung ist eine große Unempfindlichkeit gegenüber Belastungs- und pH-Stößen, die Ausbildung eines schweren Schlammes mit einem geringen Schlammindex und damit die Eindickfähigkeit. Für eine rasche Anpassung an sich ständig ändernde Belastungszustände, wie z.B. organisch unerwünschte Stoffe, schwankende pH-Werte etc., ist ein hohes Maß an Variabilität erforderlich.

Die Bakterien weisen eine Vielfalt von Möglichkeiten zur Gewinnung resistenter Merkmale auf wie:
- Erhöhung der Mutätionsrate: durch mutagene Einflüsse um den Faktor $10^3$ - $10^4$
- Konjugation: Übertragung von Plasmiden
- Rekombination: Neukombination des Erbgutes in der Meiosis
- Mobilisation: Übertragung von nicht autotransferablen Plasmiden
- Transformation: Gegenübertragung durch freie DNA
- Transduktion: Übertragung von DNA über Bakteriophagen.

Die Menge des produzierten Überschußschlammes ist vom Schlammalter und der Schlammbelastung abhängig. Unter den gegebenen Umständen beträgt die Menge 0,8 - 1,6 kg TS/kg $BSB_5$ Abbau. Beim $BSB_5$-Abbau in der hochbelasteten Belebungsstufe kann bei der Zufuhr von Kot/Harn-Gülle mit einem $BSB_5$ von 15 - 40 kg/m$^3$ eine Belebtschlammasse von 18 - 48 kg/m$^3$ gebildet werden. Bei Mastschweinen liegt die Bildungsrate bei ca. 36 kg TS/m$^3$ Gülle.

Erfindungsgemäß wird eine adaptierte Bakterienmasse in der Belebungsanlage 25 des Biowäschers gebildet. Diese entsteht sowohl beim Abbau der Geruchsstoffe als auch durch gezielte Zugabe von Gülle, Sickerwasser aus den Rottehallen und Kondensaten aus der abgekühlten Abluft. Durch die beschriebenen mikrobiologischen Mechanismen ist diese biogene Masse in der Lage, den Verrottungsprozeß einzuleiten und zu beschleunigen. Es wird daher erfindungsgemäß dem Rohkompostmaterial vor oder am Eingang der Rottetrommel 6 und erforderlichenfalls auch nach der Rottetrommel 6 über Leitungen E bzw. E' diese Bakterienmasse zugesetzt. Je nach Abbau und Reduktion der geruchsbildenden Stoffe in der Fermentierungstrommel wird Bakterienmasse in den Zwangsmischer zudosiert, damit der restliche Abbau in der Intensivrotte erfolgt. Die Menge des Bakterienschlammes beträgt 0,5 bis 5 kg TS/Tonne Frischkompost, vorzugsweise 2 kg TS/Tonne.

Zum Zweck der Bakterienanzüchtung und Vermehrung werden 5 - 20% der Güllemasse, vorzugsweise 10%, der Belebungsanlage zugeführt. Pro m³ Gülle wird im Mittel eine Bakterienschlammasse von ca. 36 kg Trockensubstanz gebildet. Diese Masse liegt in flüssiger Schlammform mit einer Konzentration von 5 bis 20 kg TS/m³, vorzugsweise 10 kg TS/m³, vor. Zur Eindickung wird eine Entwässerungsmaschine, vorzugsweise eine Zentrifuge, eingesetzt. Danach beträgt der Feststoffgehalt des Bakterienschlammes 50 - 250 kg TS/m³, vorzugsweise 150 kg TS/m³. Somit entstehen aus einem Kubikmeter Gülle im Mittel 240 Liter eingedickter Bakterienschlamm. Die Menge des rückgeführten und mit dem Rohkompostmaterial vermengten Bakterienschlammes beträgt 5 - 50 l/Tonne, vorzugsweise 15 l/Tonne oder 2,2 kg TS/Tonne Rohkompost.

Bei der Entwicklung von Mikroorganismen können verschiedene Phasen unterschieden werden, wobei für das erfindungsgemäße Verfahren die lag-Phase, die Accelerationsphase und die exponentielle Phase von besonderer Bedeutung sind.

Die Sauerstoffübertragung spielt in dem System Substrat-Wasser-Mikroorganismenzelle-Luft eine wichtige Rolle. Gerade bei der Oxidation von Güllesubstraten muß die $O_2$-Versorgung der Mikroorganismen intensiver sein als bei anderen C-Quellen. Je intensiver die zugeführte Luft mit dem Substrat vermischt wird, desto höher ist der $O_2$-Übergang Luft-Substrat-Zelle. Dies wird in der Keimvermehrungsanlage ausgenutzt.

Bei dem kontinuierlichen Verfahren befinden sich die Mikroorganismen in einem bestimmten Stadium der exponentiellen Phase. Hier ist die Wachstumsgeschwindigkeit der Mikroorganismen praktisch konstant und die Vermehrung findet nach einer geometrischen Progression statt.

Nach Monod wachsen die Mikroorganismen in der exponentiellen Phase mit einer spezifischen Wachstumsrate µ so lange, bis die Zellteilungsrate durch äußere Bedingungen begrenzt wird. Weiterhin ist die spezifische Wachstumsrate einer Mikroorganismenkultur proportional der begrenzten Substratkonzentration s. Mathematisch ausgedrückt ist dies:

$$\mu = \frac{1}{x} * \frac{dx}{dt} \qquad\qquad \mu = \mu_m * \left(\frac{s}{K_s + s}\right)$$

($K_s$ = Sättigungskonstante, x = Mikroorganismenkonzentration, t = Zeit)

Bei großen Substratkonzentrationen erreicht µ einen Sättigungswert. Das Wachstum hört auf, wenn die Nahrung verbraucht ist oder wenn sich giftige Stoffwechselprodukte im Substrat anreichern. Daher ist das Mischungsverhältnis von Bakterienmasse zu Gülle und in weiterer Folge auch zum Kohlenstoffträgermaterial so einzustellen, daß für die geruchsstoffabbauenden Mikroorganismen der Sättigungsbereich vorliegt. Die Geschwindigkeit des Abbaus, die unmittelbar von der Bakterienkonzentration abhängig ist und weitgehende technische und wirtschaftliche Auswirkungen hat, ist nur damit zu steigern, daß die I. Phase (lag-Phase) durch Biomassenimpfung verkürzt wird. Damit ist bereits beim Eintreten der Gülle in die Rottetrommel eine hohe Organismenkonzentration vorhanden. Die kontinuierliche Dosierung und Mischung ist für den Betrieb der erfindungsgemäßen Kompostieranlage wichtig, da bei den herkömmlichen Verfahren eine sich nur langsam entwickelnde Flora herangezüchtet werden muß.

Im erfindungsgemäßen Verfahren wird die Bakterienmasse in der Belebtschlammanlage, vorzugsweise mit einem nachgeschalteten Keimvermehrungsbecken 27, gezüchtet und anschließend vermehrt. Die Zugabe und Mischung kann in einer Mischstrecke vor der Gülleeinbringung in die Rottetrommel oder in die Trommel selbst erfolgen. Weiters kann Bakterienmasse in den Zwangsmischer am Trommelende zugesetzt werden.

Die Effektivität der adaptierten Bakterienmasse hängt von den Milieubedingungen des beimpften Substrates ab. Die Bakterien werden in der Flüssigphase der Belebtschlammanlage mit Geruchsstoffen und Güllezusatz angezüchtet. Somit tritt die größte Wirkung bei Dosierung in die Güllezuleitung E bzw. E' auf. Dies erfolgt in einer Mischstrecke vor dem Eintritt in die Fermentierungstrommel 6, wobei vorzugsweise ein Rohrbündelmischer 29 eingesetzt wird.

Andererseits erfolgt der Schadstoffabbau in der Fermentierungstrommel in einer Flüssig-/Feststoffphase bei erhöhten Temperaturen von 50 - 70 °C. Während die Bakterien gegenüber den erhöhten Temperaturen relativ unempfindlich sind, bedürfen sie einer gewissen Anpassungszeit an die Feststoffphase. Somit hängt die Entscheidung über die Zugabestelle weitgehend vom Mischungsverhältnis Gülle zu Kohlenstoffträger und Strukturmaterial ab.

Für die Auslegung von Kompostierungsanlagen für tierische Exkremente und zur Kostenrechnung sind die Massen- und Volumenströme von besonderer Bedeutung. In den Figuren 2 und 3 sind diese Ströme beispielhaft für ein Schweinegülle-Altpapier-Gemenge dargestellt. Bei anderen Substraten ähnlicher Zusammensetzung ergeben sich vergleichbare Ergebnisse.

Tabelle 1

| Spezifische Dimensionierungsgrundlagen für die Keimvermehrungsanlage | |
|---|---|
| Parameter | Einheit Bemessungswert |
| Belebungsbecken: | |
| Abwassermenge pro Kompostrohmaterial<br>Aufenthaltszeit t<br>Raumbelastung BR<br>Schlammbelastung BTS<br>Schlammkonzentration TS<br>Sauerstoffgehalt $O_2$<br>Sauerstoffeintrag OC | $m^3$/t 1 - 5 ( 2)<br>h 1 - 2 (0,5)<br>kg $BSB_5$/d 1 - 15 ( 10)<br>kg/kg,d 1 - 12 ( 5)<br>kg/$m^3$ 0,5 - 8 ( 2)<br>mg/l 0,5 - 2 ( 1)<br>0,2 - 1,2 (0,5) |
| Nachklärbecken: | |
| Aufenthaltszeit t<br>Oberflächenbelastung<br>Rücklaufschlammverhältnis<br>Feststoffgehalt $RÜ_{TS}$<br>Überschußschlammanfall ÜS<br>Schlammalter | h 1 - 4 (1,5)<br>m/h 0,8 - 5 (2,0)<br>% 50 - 300 (150)<br>kg/$m^3$ 1 - 15 ( 5)<br>kg TS/kg $BSB_5$ 0,8 - 1,6 (1,2)<br>d 0,2 - 1 (0,5) |
| Keimvermehrungsbecken: | |
| Aufenthaltszeit t<br>Sauerstoffgehalt $O_2$<br>Feststoffgehalt TS | d 0,5 - 2 ( 1)<br>mg/l 0,5 - 2 ( 1)<br>kg/$m^3$ 5 - 20 ( 10) |
| Entwässerung: | |
| Feststoffgehalt TS | kg/$m^3$ 50 - 250 (150) |

**Patentansprüche**

1. Verfahren zur geruchsarmen aeroben Behandlung (Kompostierung) von flüssigen und/oder festen tierischen Exkrementen in Mischung mit organischem Kohlenstoffträgermaterial unter Verwendung einer Fermentierungstrommel, gekennzeichnet durch die Kombination folgender Verfahrensschritte:

a) die Komponenenten tierische Exkremente und organisches Kohlenstoffträgermaterial, z.B. Altpapier, Holzabfälle, etc., im Masseverhältnis von 3 : 1 bis 1 : 3, zusammen mit einer Bakterienmasse von 0,75 bis 7,5 kg TS (Trockensubstanz) pro Tonne beider Komponenten in die Fermentierungstrommel eingebracht werden, so daß sich eine Mischfeuchte von 40% bis 80% und ein C/N-Verhältnis von 5 : 1 bis 30 : 1 einstellt,

b) in der rotierenden Fermentierungstrommel bei einem Füllgrad von 20% bis 80% das Rohkompostmaterial 0,5 bis 10 Tage bei auf 50 bis 70°C ansteigender Temperatur belüftet wird,

c) dem aus der Fermentierungstrommel ausgetragenen vorgerotteten Kompostmaterial in einem Zwangsmischer zerkleinerte Grünabfälle zugegeben werden, daß sich ein Porenvolumen von 20% - 60% ergibt,

d) das homogene Gemisch aus vorgerottetem Kompostmaterial und Grünabfällen mit oder ohne mechanische Umsetzung in Flächenmieten von 0,5 bis 3,0 m aufgesetzt und 1 bis 8 Wochen verrottet wird,

e) das verrottete Kompostmaterial aus Schritt d) einer Nachrotte in 0,5 bis 4,0 m hohen Mieten 1 bis 20 Wochen unterzogen wird,

f) die Abluftströme aus einem Güllezwischenspeicher, der Fermentierungstrommel, der Intensivrotte und Nachrotte einem Biowäscher mit einem Flüssigkeits-/Gasverhältnis von 1 - 5 l/$m^3$, einer Gasgeschwindigkeit in der Tauschzone von max. 1 m/sec, einer mittleren Verweilzeit von 0,5 bis 1,5 sec, einem mittleren Druckabfall von 0,5 bis 2,0 mbar und Schichtstärken von 0,5 bis 1,5 m zugeführt werden,

g) Bakterienmasse für den beschleunigten und selektiven Abbau der Geruchsstoffe in der Fermentierungstrommel, im Biowäscher und einer nachgeschalteten Belebtschlammanlage, unter Zugabe von flüssigen tierischen Exkrementen in der Höhe von 5% - 20% der Gesamtgüllemenge in ein Belebungsbecken, erzeugt wird,

h) Überschußschlamm aus einem Nachklärbecken in ein Keimvermehrungsbecken geleitet wird,

i) die Keimvermehrung in einem getrennten Becken mit einer hydraulischen Aufenthaltszeit von 0,5 bis 2,0 Tagen bei Zudosierung von tierischen Exkrementen, Kondensaten und Sickerwasser erfolgt,

j) die flüssige Bakterienmasse mit einem Trockensubstanz-Gehalt von 5 bis 20 kg/m$^3$ in einer Entwässerungseinrichtung auf 50 bis 250 kg/TS m$^3$ eingedickt wird,

k) die Abluft über ein Biofilter aus 50 Gew.-% intensiv verrottetem Kompostmaterial und 50 Gew.-% grobkörnigem Rindenkompostmaterial bei Filterflächenbelastungen von 10 bis 300 m$^3$/m$^2$. h, bei mittleren Verweilzeiten von 5 bis 90 sec, Schichthöhen von 0,5 bis 1,5 m und einer Feuchtigkeit von 40 bis 60% geleitet wird.

2. Verfahren nach Anspruch 1, dadurch gekennzeichnet, daß man Stufe
a) bei einem Mischungsverhältnis von Tierexkrementen zu Kohlenstoffträgermaterial von 1 : 1,5, bei einem C/N-Verhältnis von 20 : 1, einer Mischfeuchte von 60 % und bei Zugabe von Bakterienmasse von 2,2 kg TS (Trockensubstanz) pro Tonne Rohkompostmaterial durchführt.

3. Verfahren nach Anspruch 1 oder 2, dadurch gekennzeichnet, daß die Verweilzeit in der Trommel 3 bis 6 Tage bei einem Füllgrad von vorzugsweise 70% beträgt.

4. Verfahren nach einem der Ansprüche 1 bis 3, dadurch gekennzeichnet, daß die Mischung aus vorgerottetem Material und Häckselgut aus Grünabfällen mit einem Doppelwellenmischer auf ein Porenvolumen von 35% durchgeführt wird.

5. Verfahren nach einem der Ansprüche 1 bis 4, dadurch gekennzeichnet, daß die Intensivrotte in Flächenmieten von 1,5 m Höhe und einer Zeit von 3 Wochen durchgeführt wird.

6. Verfahren nach einem der Ansprüche 1 bis 5, dadurch gekennzeichnet, daß die Nachrotte in Flächenmieten von 3 m Höhe und einer Zeitdauer von 3 Wochen durchgeführt wird.

7. Verfahren nach einem der Ansprüche 1 bis 6, dadurch gekennzeichnet, daß der Biowäscher als 2-stufiger Sprühstromwäscher ausgebildet ist und bei einem Flüssigkeits-/Gasverhältnis von 2 l/m$^3$ betrieben wird.

8. Verfahren nach einem der Ansprüche 1 bis 7, dadurch gekennzeichnet, daß die Aufenthaltszeit im Belebungsbecken 0,2 bis 2 h, vorzugsweise 0,5 h, die Schlammbelastung 1 bis 12 kg/kg.d, vorzugsweise 5 kg/kg.d beträgt, der Sauerstoffgehalt bei 0,5 bis 2 mg/l, vorzugsweise bei 0,5 mg/l liegt.

9. Verfahren nach einem der Ansprüche 1 bis 8, dadurch gekennzeichnet, daß die dem Belebungsbecken zugeführte Exkrementmenge 10 % der gesamten Güllemenge beträgt.

10. Verfahren nach einem der Ansprüche 1 bis 9, dadurch gekennzeichnet, daß die Aufenthaltszeit im Nachklärbecken 0,5 bis 2 h, vorzugsweise 1,5 h, die Oberflächenbelastung 0,8 bis 5 m/h, vorzugsweise 2,0 m/h, das Rücklaufschlammverhältnis 50 bis 300%, vorzugsweise 150%, beträgt und die Überschußschlammenge bei 0,8 bis 1,6 kg TS/kg BSB$_5$, vorzugsweise 1,2 kg TS/kg BSB$_5$, liegt.

11. Verfahren nach einem der Ansprüche 1 bis 10, dadurch gekennzeichnet, daß die Aufenthaltszeit im Keimvermehrungsbecken 0,5 bis 2 Tage, vorzugsweise 1,0 Tage, der Sauerstoffgehalt 0,5 bis 2,0 mg/l, vorzugsweise 1,0 mg/l, beträgt.

12. Verfahren nach einem der Ansprüche 1 bis 11, dadurch gekennzeichnet, daß der Bakterienschlamm in einer Zentrifuge auf 50 bis 250 kg TS/m$^3$, vorzugsweise 150 kg TS/m$^3$, eingedickt wird.

**13.** Verfahren nach einem der Ansprüche 1 bis 12, dadurch gekennzeichnet, daß dem Rohkompostmaterial am oder vor dem Trommeleingang Bakterienschlamm aus der Belebtschlammanlage, vorzugsweise einem dem Nachklärbecken nachgeschalteten Keimvermehrungsbecken, zugegeben wird.

**14.** Verfahren nach Anspruch 13, dadurch gekennzeichnet, daß der Bakterienschlamm an beliebiger Stelle der Güllezuleitung zudosiert wird, vorzugsweise in einer als Rohrbündelmischer ausgebildeten Mischstrecke.

**15.** Verfahren nach einem der Ansprüche 1 bis 14, dadurch gekennzeichnet, daß dem aus der Fermentierungstrommel ausgetragenen vorgerotteten Kompostmaterial in dem Zwangsmischer zusätzlich Bakterienschlamm, vorzugsweise 0,5 bis 5 kg TS/Mg Frisch-Kompostmaterial zudosiert wird.

**16.** Verfahren nach einem der Ansprüche 1 bis 15, dadurch gekennzeichnet, daß die im Biowäscher vorgereinigte Abluft in einem Biofilter nachgereinigt wird, so daß der gesamte olfaktometrisch gemessene Wirkungsgrad 98 bis 99,9%, vorzugsweise 99,5%, beträgt.

**17.** Verfahren nach einem der Ansprüche 1 bis 16, dadurch gekennzeichnet, daß der Biofilter eine Filterflächenbelastung von 30 bis 300 m$^3$/m$^2$.h, vorzugsweise 50 m$^3$/m$^2$.h, aufweist, die mittlere Verweilzeit 5 bis 90 sec, vorzugsweise 50 sec, die Schichthöhe 0,5 bis 1,8 m, vorzugsweise 1,4 m, beträgt.

**Claims**

**1.** Process for the low-odour aerobic treatment (composting) of liquid and/or solid animal excrement mixed with an organic carbon substrate using a fermentation drum, characterised by the combination of the following process stages:

a) the components animal excrement and organic carbon substrate, for example waste paper, wood waste etc., are introduced into the fermentation drum in a ratio by weight of 3:1 to 1:3, together with a bacterial mass of 0.75 to 7.5 kg DM (dry matter) per tonne of the two components, such that a mixture moisture content of 40% to 80% and a C/N ratio of 5:1 to 30:1 is achieved,

b) the crude compost material is aerated in the rotating fermentation drum which is 20% to 80% full for 0.5 to 10 days at temperatures rising to 50 to 70°C,

c) shredded green waste is added in a positive mixer to the pre-rotted compost material discharged from the fermentation drum, such that a pore volume of 20%-60% is obtained,

d) the homogeneous mixture of pre-rotted compost material and green waste is piled with or without mechanical turning into flat heaps of 0.5 to 3.0 m and rotted for 1 to 8 weeks,

e) the rotted compost material from stage d) is subjected to secondary rotting in heaps of 0.5 to 4.0 m in height for 1 to 20 weeks,

f) the waste air streams from the liquid manure holding tank, the fermentation drum, intensive rotting and secondary rotting are fed into a biowasher with a liquid/gas ratio of 1-5 l/m$^3$, a maximum gas velocity in the exchange zone of 1 m/sec, an average dwell time of 0.5 to 1.5 sec, an average pressure drop of 0.5 to 2.0 mbar and layer thicknesses of 0.5 to 1.5 m,

g) a bacterial mass for the accelerated and selective degradation of the odour-producing substances in the fermentation drum, the biowasher and a down-stream activated sludge plant is produced with the addition of liquid animal excrement in an amount of 5%-20% of the total quantity of liquid manure in an activated sludge tank,

h) excess sludge from a secondary clarifier tank is introduced into a bacterial propagation tank,

i) bacterial propagation proceeds in a separate tank with a hydraulic residence time of 0.5 to 2.0 days with the addition of animal excrement, condensates and seepage liquid,

j) the liquid bacterial mass with a dry matter content of 5 to 20 kg/m$^3$ is thickened in a dewatering device to 50 to 250 kg DM/m$^3$*,

k) the waste air is passed through a biofilter prepared from 50 wt.% intensively rotted compost material and 50 wt.% coarse bark compost material at filter surface loading rates of 10 to 300 m$^3$/m$^2$•h, at average dwell times of 5 to 90 sec, layer thicknesses of 0.5 to 1.5 m and a moisture content of 40 to 60%.

* "kg/TS m$^3$" has been translated as "kg DM/m$^3$" as this is apparently what is meant.

2. Process according to claim 1, characterised in that stage a) is performed at a mixture ratio of animal excrement to carbon substrate of 1:1.5, a C/N ratio of 20:1, a mixture moisture content of 60% and with the addition of a bacterial mass of 2.2 kg DM (dry matter) per tonne of crude compost material.

3. Process according to claim 1 or 2, characterised in that the dwell time in the drum is 3 to 6 days with the drum preferably being 70% full.

4. Process according to one of claims 1 to 3, characterised in that mixing of pre-rotted material and chopped green waste is performed with a double screw mixer to a pore volume of 35%.

5. Process according to one of claims 1 to 4, characterised in that the intensive rotting is performed in flat heaps of 1.5 m in height and over a period of 3 weeks.

6. Process according to one of claims 1 to 5, characterised in that the secondary rotting is performed in flat heaps of 3 m in height and over a duration of 3 weeks.

7. Process according to one of claims 1 to 6, characterised in that the biowasher is a 2-stage spray/flow washer and is operated at a liquid/gas ratio of 2 $l/m^3$.

8. Process according to one of claims 1 to 7, characterised in that the residence time in the activated sludge tank is 0.2 to 2 h, preferably 0.5 h, sludge loading is 1 to 12 kg/kg•d, preferably 5 kg/kg•d, the oxygen content is 0.5 to 2 mg/l, preferably 0.5 mg/l.

9. Process according to one of claims 1 to 8, characterised in that quantity of excrement introduced into the activated sludge tank amounts to 10% of the total quantity of liquid manure.

10. Process according to one of claims 1 to 9, characterised in that the residence time in the secondary clarifier tank is 0.5 to 2 h, preferably 1.5 h, the surface loading is 0.8 to 5 m/h, preferably 2.0 $m/h^{2**}$, the sludge recycle ratio is 50 to 300%, preferably 150% and the excess sludge quantity is 0.8 to 1.6 kg $DM/kg\ BOD_5$, preferably 1.2 kg $DM/kg\ BOD_5$.

11. Process according to one of claims 1 to 10, characterised in that the residence time in the bacterial propagation tank is 0.5 to 2 days, preferably 1.0 day, the oxygen content is 0.5 to 2.0 mg/l, preferably 1.0 mg/l.

12. Process according to one of claims 1 to 11, characterised in that the bacterial sludge is thickened in a centrifuge to 50 to 250 kg $DM/m^3$, preferably 150 kg $DM/m^3$.

13. Process according to one of claims 1 to 12, characterised in that bacterial sludge from the activated sludge plant, preferably from a bacterial propagation tank down-stream from the secondary clarifier tank, is added to the crude compost material as or before it enters the drum.

14. Process according to claim 13, characterised in that the bacterial sludge is introduced at any desired point in the liquid manure feed line, preferably in a mixing section arranged as a multi-tube mixer.

15. Process according to one of claims 1 to 14, characterised in that bacterial sludge, preferably 0.5 to 5 kg DM/Mg of fresh compost material, is additionally added in the positive mixer to the pre-rotted compost material discharged from the fermentation drum.

16. Process according to one of claims 1 to 15, characterised in that waste air precleaned in the biowasher undergoes secondary purification in a biofilter, such that the total olfactometrically determined efficiency is 98 to 99.9%, preferably 99.5%.

17. Process according to one of claims 1 to 16, characterised in that the biofilter has a filter surface loading rate of 30 to 300 $m^3/m^2$•h, preferably 50 $m^3/m^2$•h, the average dwell time is 5 to 90 sec, preferably 50 sec, the layer thickness is 0.5 to 1.8 m, preferably 1.4 m.

** This unit seems incomplete. It should probably read ″m³/m².h but has been left unchanged.

15

**Revendications**

1. Procédé pour le traitement aérobie (compostage) peu malodorant d'excréments solides et/ou liquides en mélange avec de la matière de base organique carbonée en utilisant un tambour de fermentation caractérisé par la combinaison des opérations suivantes de procédé :

a) les composants, excréments animaux et matières de base carbonée organique, par exemple vieux papiers, déchets de bois, etc., dans un rapport de masse de 3 : 1 à 1 : 3 sont introduits ensemble avec une masse bactérienne de 0,75 à 7,5 kg SS (substance sèche) par tonne des deux composants dans le tambour de fermentation de sorte que cela produise une humidité mixte de 40 % à 80 % et un rapport C/N de 5:1 à 30:1,

b) dans le tambour rotatif de fermentation et pour un degré de remplissage de 20 à 80 %, la matière de compost brute est aérée durant 0,5 à 10 jours à une température augmentant de 50 à 70° C,

c) l'apport de déchets veris broyés dans un malaxeur à mélange forcé, à la matière de compost prépourrie provenant du tambour de fermentation donne un volume poreux de 20 % - 60 %,

d) le mélange homogène de la matière de compost prépourrie et des déchets verts est placé dans des meules de surface de 0,5 à 3,0 m avec ou sans transposition mécanique et y pourrit pendant 1 à 8 semaines,

e) la matière de compost pourrie à l'étape d) est soumise à un pourrissage ultérieur dans des meules de 0,5 à 4,0 m de hauteur pendant 1 à 20 semaines,

f) les courants d'air sortant d'un silo intermédiaire à lisier, du tambour de fermentation, de la pourriture intensive et de la pourriture ultérieure sont amenés à un laveur biologique avec un rapport liquide/gas de 1 - 5 l/m$^3$, une vitesse des gaz dans la zone d'échange de 1 m/sec maximum, un temps de séjour moyen de 0,5 à 1,5 sec, une chute de pression moyenne de 0,5 à 2,0 mbar et des épaisseurs de couche de 0,5 à 1,5 m,

g) pour l'élimination accélérée et sélective des substances malodorantes dans le tambour de fermentation, dans le laveur biologique et dans une installation de mousse activée placée à la suite, la masse bactérienne est produite par ajout, dans un bassin d'activation, d'excréments animaux liquides dans des proportions de 5 % - 20 % de la quantité totale de lisier,

h) la boue excédentaire provenant d'un bassin d'épuration ultérieure est amenée dans un bassin de prolifération des germes,

i) la prolifération des germes s'effectue dans un bassin séparé avec un temps de séjour hydraulique de 0,5 à 2,0 jours par ajout d'excréments animaux, de condensats et d'eau d'infiltration,

j) la masse bactérienne liquide est épaissie par une teneur en substance sèche de 5 à 20 kg/m$^3$ dans un dispositif de déshydratation pour atteindre 50 à 250 kg/SS m$^3$,

k) l'air d'échappement est éliminé par l'intermédiaire d'un filtre biologique de 50 % en poids de matière de compost à pourrissage intensif et de 50 % en poids de matière de compost grossier de boeuf pour des charges de surface de filtre de 10 à 300 m$^3$/m$^2$. h, à raison de temps de séjours moyens de 5 à 90 sec, de hauteurs de couche de 0,5 à 1,5 m et à raison d'une humidité de 40 à 60 %.

2. Procédé selon la revendication 1, caractérisé en ce que l'on exécute la phase a) à raison d'un rapport de mélange d'excréments animaux et de matière de base carbonée organique de 1 : 1,5 et un rapport de C/N de 20 : 1, une humidité mixte de 60 % et par apport de masse bactérienne de 2,2 kg SS (substance sèche) par tonne de matière de compost brute.

3. Procédé selon la revendication 1 ou 2, caractérisé en ce que le temps de séjour dans le tambour est de 3 à 6 jours à raison d'un taux de remplissage de préférence de 70 %.

4. Procédé selon l'une des revendications 1 à 3, caractérisé en ce que le mélange de matière prépourrie et de paille provenant de déchets verts est obtenu avec un mélangeur à deux arbres sur un volume poreux de 35 %.

5. Procédé selon l'une des revendications 1 à 4, caractérisé en ce que le pourrissage intensif s'effectue dans des meules de surface de 1, 5 m de hauteur et sur une période de 3 semaines.

6. Procédé selon l'une des revendications 1 à 5, caractérisé en ce que le pourrissage ultérieur s'effectue dans des meules de surface de 3 m de hauteur et sur une période de 3 semaines.

**7.** Procédé selon l'une des revendications 1 à 6, caractérisé en ce que le laveur biologique est conçu comme un laveur à courant pulvérisé biphasé et est entraîné à raison d'un rapport gaz/liquide de 2 l/m$^3$.

**8.** Procédé selon l'une des revendications 1 à 7, caractérisé en ce que le temps de séjour dans le bassin d'activation est de 0,2 à 2 h, de préférence 0,5 h, la charge en boue de 1 à 2 kg/kg.d, de préférence 5 kg/kg.d, la teneur en oxygène de 0,5 à 2 mg/l, de préférence 0,5 mg/l.

**9.** Procédé selon l'une des revendications 1 à 8, caractérisé en ce que la quantité d'excréments amenée au bassin d'activation représente 10 % de la quantité totale de lisier.

**10.** Procédé selon l'une des revendications 1 à 9, caractérisé en ce que le temps de séjour dans le bassin d'épuration est de 0,5 à 2 h, de préférence 1,5 h, la charge de surface de 0,8 à 5 m/h, de préférence 2,0 m/h, le rapport de la recirculation de la boue de 50 à 300 %, de préférence 150 %, et la quantité de boue excédentaire de 0,8 à 1,6 kg SS/kg BSB$_5$, de préférence 1,2 kg SS/kg BSB$_5$ .

**11.** Procédé selon l'une des revendications 1 à 10, caractérisé en ce que le temps de séjour dans le bassin de prolifération des germes est de 0,5 à 2 jours, de préférence 1,0 jour, la teneur en oxygène de 0,5 à 2,0 mg/l, de préférence 1,0 mg/l.

**12.** Procédé selon l'une des revendications 1 à 11, caractérisé en ce que la boue bactérienne est épaissie dans une centrifugeuse de 50 à 250 kg SS/m$^3$, de préférence 150 kg SS/m$^3$.

**13.** Procédé selon l'une des revendications 1 à 12, caractérisé en ce qu'il est ajouté à la matière de compost brute, avant ou à l'entrée du tambour, de la boue bactérienne provenant de l'installation d'activation de la boue d'un bassin de prolifération des germes placé après le bassin d'épuration.

**14.** Procédé selon la revendication 13, caractérisé en ce que la boue bactérienne peut être ajoutée à n'importe quel endroit de la conduite d'amenée du lisier, de préférence au niveau d'une voie de mélange conçue comme un mélangeur à faisceau tubulaire.

**15.** Procédé selon l'une des revendications 1 à 14, caractérisé en ce qu'on ajoute, à la matière de compost prépourrie provenant du tambour de fermentation et se trouvant dans le malaxeur à mélange forcé, de la boue bactérienne supplémentaire, de préférence à raison de 0,5 à 5 kg SS/Mg de matière de compost fraîche.

**16.** Procédé selon l'une des revendications 1 à 15, caractérisé en ce que l'air prépurifié dans le laveur biologique est purifié à nouveau dans un filtre biologique de sorte que le degré total d'action mesuré par olfactométrie s'élève de 98 à 99,9 % de préférence 99,5 %.

**17.** Procédé selon l'une des revendications 1 à 16, caractérisé en ce que le filtre biologique présente une charge de surface de filtre de 30 à 300 m$^3$/m$^2$.h de préférence 50 m$^3$/m$^2$.h, le temps de séjour moyen étant de 5 à 90 sec, de préférence 50 sec, la hauteur de couche de 0,5 à 1,8 m, de préférence 1,4 m.

Figur 1

Figur 2: <u>Massenströme bei der Kompostierung von Schwei-</u>
<u>negülle und Altpapier</u>

Gülle (10 % TS)                     Altpapier (90 % TS)
    1,0 Mg                              0,7 Mg
    └──────────── 1,7 Mg ────────────┘
            Fermentierungstrommel ──→ 0,2 Mg Rotteverlust

                        ↓

Häckselgut 0,6 Mg ──→ Mischung
(aus Grünabfällen)      ↓
            Intensivrotte    ──→ 0,9 Mg Rotteverlust
                        ↓
            Nachrotte        ──→ 0,2 Mg Rotteverlust
                        ↓
            Siebung
                        ↓
    ┌───────────────────────────────┐
    ↓                               ↓
Grobkompost                     Feinkompost
0,7 Mg                          0,3 Mg
    ↓                               ↓
Zerkleinerung ──0,7 Mg──→ 1,0 Mg Feinkompost

Figur 3: <u>Volumenströme bei der Kompostierung von</u>
<u>Schweinegülle und Altpapier</u>

Gülle (10 % TS)                    Altpapier (90 % TS)

   1,0 m³                              2,8 m³

   |——————————————— 3,8 m³ ———————————————|
                              ↓

         Fermentierungstrommel ——→ 0,5 m³ Rotteverlust

                   ↓

Häckselgut 1,2 m³ ——→ Mischung
(aus Grünabfällen)
                   ↓

         Intensivrotte     ——→ 2,0 m³ Rotteverlust

                   ↓

         Nachrotte         ——→ 0,5 m³ Rotteverlust

                   ↓

         Siebung

   |————————————————————————————————————|
   ↓                                    ↓

Grobkompost                        Feinkompost

  1,1 m³                              0,5 m³

   ↓                                   ↓
Zerkleinerung ————— 0,75 m³ —————→ 1,25 m³ Feinkompost

20